# EUROPEAN PATENT APPLICATION

(11) **EP 1 464 220 A1**
(43) Date of publication of application: **06.10.2004**
(21) Application number: 03006740.9
(22) Date of filing: 25.03.2003
(51) Int. Cl.: A01K 95/00, B22D 21/00, B22D 17/22, B22C 9/06

(54) **Sinker casting mold**

(71) Applicant: WATER GREMLIN COMPANY, White Bear Lake, MN 55110 (US)
(72) Inventor: Ratte, Robert W., North Oaks, MN 55127 (US); Clift, Timothy J., Lino Lakes Minnesota 55127 (US)
(74) Representative: Modiano, Guido, Dr.-Ing.

(57) **Abstract**

An expandable mold having sidewalls that are held in a first condition for forming a mold cavity of a minimum volume with the sidewalls laterally separable to thereby expand the mold cavity to a volume sufficient to accommodate the expansion of an article to a condition that eliminates formation of an interference fit between the sidewalls of the mold and the cast article as the article solidifies.

## Description

### FIELD OF THE INVENTION

This invention relates generally to casting and, more specifically, to casting metal sinkers wherein the liquid metal expands upon solidification causing the cast article to tenaciously adhere to the mold.

### CROSS REFERENCE TO RELATED APPLICATIONS

None

### STATEMENT REGARDING FEDERALLY SPONSORED RESEARCH OR DEVELOPMENT

None

### REFERENCE TO A MICROFICHE APPENDIX

None

### BACKGROUND OF THE INVENTION

Traditional lead sinkers have been used as weights for fishing lines. Because of environmental concerns manufactures have proceeded to make sinkers from other metals or metal alloys. One of the metals ideally suitable for use in sinkers is bismuth since it has a high specific gravity. Unfortunately, bismuth has a peculiar solidification characteristic that makes it difficult and costly to form sinkers therefrom. As bismuth cools it expands rather than shrinks, consequently, upon cooling the bismuth article forms an interference fit with the mold making it extremely difficult to remove. Coupled with the fact that bismuth is a brittle type metal one can easily shatter a bismuth cast article by attempting to drive the cast bismuth article from a mold. The present invention provides a method and mold that allows one to cast sinkers from metals such as bismuth, bismuth alloys or other metals that expand during solidification while at the same time overcoming the peculiar solidification characteristics which normally produces an interference fit between the cast article and the sidewalls of the mold cavity.

### SUMMARY OF THE INVENTION

Briefly, the present invention comprises an expandable mold having sidewalls that are laterally separable to thereby expand the mold cavity sufficiently to accommodate the expansion of a cast article that expands upon solidification without fracture of the cast article and at the same time eliminating an interference fit between the sidewalls of the mold and the cast article.

### BRIEF DESCRIPTION OF THE DRAWINGS

Figure 1 is a perspective view of two of the mold parts of the present invention
Figure 2 is a top view of the mold parts of Figure 1 located in a mold block;
Figure 3 is top view of two of the mold parts for forming a cavity for casting an article therein;
Figure 3A is a top view of one of the mold parts of Figure 3;
Figure 4 is an end view of the mold parts of Figure 3;
Figure 4A is an end view of the mold part of Figure 3A;
Figure 4B is an end view of an end mold part,
Figure 5 is a sectional view taken along lines 5-5 showing the mold parts in a minimum volume condition;
Figure 6 is a sectional view taken along lines 5-5 showing the mold parts in an expanded volume condition;
Figure 7 is an alternate embodiment showing a top view of a onepiece expanding mold;
Figure 8 is a side view taken along lines 8-8 of Figure 7 showing the onepiece expanding mold in an expanded condition;
Figure 9 top view of the one piece expanding mold of Figure 7 in a minimum volume condition; and
Figure 10 is a side view of theone piece expanded mold of Figure 7 in the minimum volume condition.

### DESCRIPTION OF THE PREFERRED EMBODIMENT

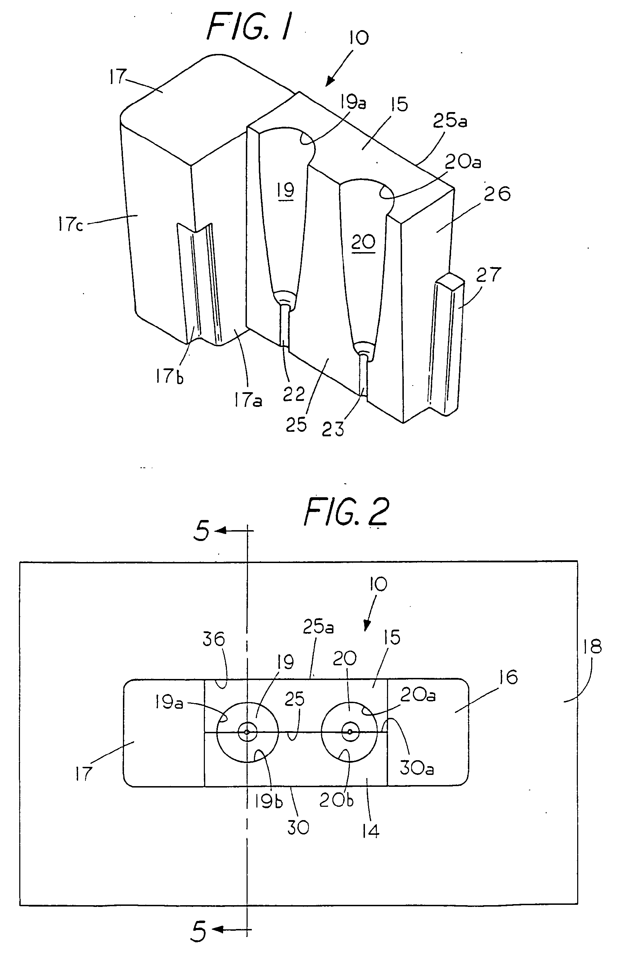

Figure 1 is a perspective view showing two mold parts 15 and 17 of a fourpart expanding mold 10 for casting a fishing sinker from a metal, such as bismuth, that expands upon solidification. Mold part 15 contains a portion of a first mold cavity 19 and a portion of a second mold cavity 20 while mold part 17 is free of any mold cavities. Mold part 17 functions to hold mold part 15 in a fixed position during casting and also allows the mold part 15 to move laterally away from a cast part during a solidification phase.

Figure 2 is a top assembly view of the fourpart mold 10 showing the four mold parts 14, 15, 16 and 17 held within a mold block 18. Mold parts 14 and 15 are, which contain the mold cavities 19 and 20 are located in a face-to-face condition showing that cavity 19 is formed by sidewalls 19a and 19b and cavity 20 is formed by sidewall 20a and 20b. End mold parts 16 and 17 do not contain a mold cavity but hold mold parts 14 and 15 in alignment with each other in mold block 18. Mold block 18 contains a converging sidewall 36 that forms a confinement region to hold mold parts 14, 15, 16 and 17 therein.

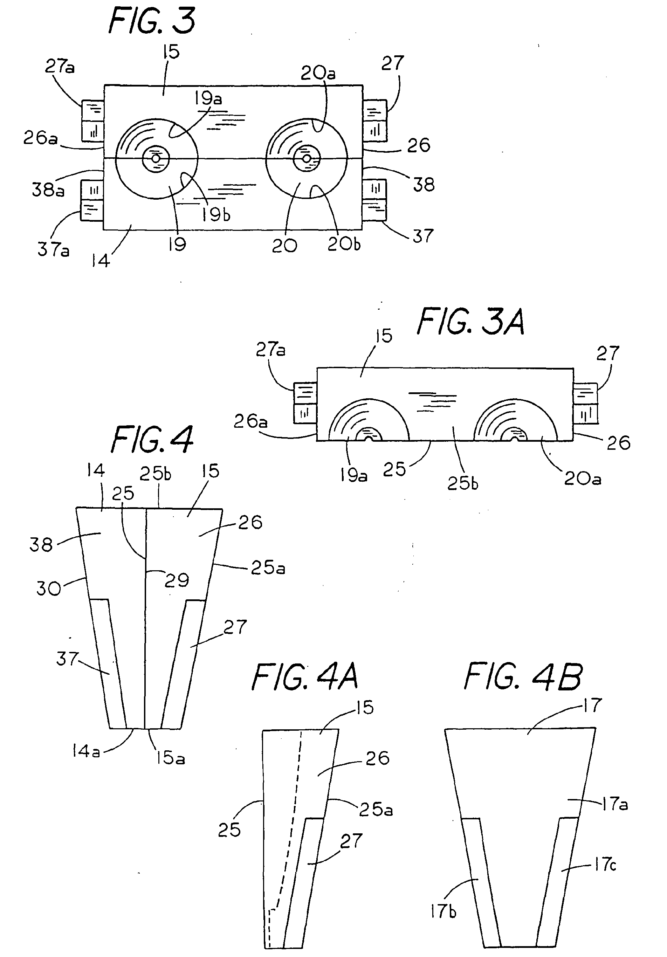

For purposes of illustrating features of the mold parts 14 and 15 reference should be made to Figure 3 which shows a top view of the two mold parts 14 and 15 located in face-to-face engagement for forming first mold cavity 19 and second mold cavity 20. Located on end 26 of mold part 15 is an angled tongue 27 and located on end 26a is an angled tongue 27a. Similarly, located on end 38 of mold part 14 is an angled tongue 37 and located on end 38a is an angled tongue 37a. A reference to Figure 3A shows an isolated top view of mold part 15 illustrating mold part 15 with a planer face 25. In the embodiment shown the mold parts 15 and 14 are identical to each other so that when placed face-to-face they form a symmetrical mold cavity 19 and 20.

Figure 4 is an end view of the mold parts 14 and 15 located in a face-to-face condition showing tongue 27 extending along one side of part 15 and tongue 37 extending along one side of mold part 14 with the tongues 37 and 27 diverging away from an apex end 14a of mold part 14 and an apex end 15a of mold part 15. Face 25 of mold part 15 is in engagement with face 29 of mold part 14. Note, outer face 25a of mold part 29 forms an acute angle with face 25 and similarly outer face 30 of mold part 14 forms an acute angle with face 29 so that when the mold parts 14 and 15 are in a face-to-face condition they converge toward the apex ends of the mold parts 14 and 15.

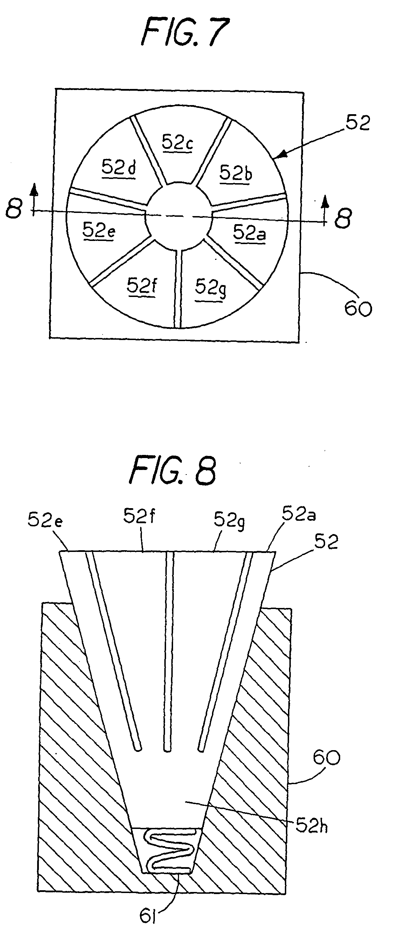

The expansion mold 10 illustrated in Figures 1-4 shows a split mold where the two separate mold parts 14 and 15 cooperate to form mold cavities that are laterally separated during the solidification phase of the cast article. A further embodiment illustrated in Figures 7-10 shows an expanding mold wherein a single mold part contains a plurality of cantilevered segments that cooperate to form a mold cavity but laterally separate during the solidification phase.

Figure 4A shows an isolated end view of the first mold part 15 having first face 25 having a portion of a mold cavity shown in dotted lines.

A reference to Figure 2 shows the mold parts 14, 15, 16 and 17 in a casting condition. In the casting condition first mold part 15 has a first face 25 having a portion of mold cavity 19 and 20 therein next to second mold part 14 having a first face 30a having a further portion of mold cavities 19 and 20 therein. The first mold part 14 and the second mold part 15 being positionable in a face-to-face to condition to create a mold cavity 19 of a first casting volume and a mold cavity 20 of a second casting volume. The outer face 30 of first mold part 14 is positionable against a first portion of a converging sidewall 36 of mold block 18 and the outer face of second mold part 15 is positionable against an opposed portion of converging sidewall 36 of mold block 18 to hold the first mold part 14 and second mold part 15 in the casting condition.

Positioned proximate one end of mold parts 14 and 15 is an end mold part 16 and positioned proximate the opposite end of mold parts 14 and 15 is a second end mold part 17. All four mold parts 14, 15, 16 and 17 are confined within the sidewall 36 in mold block 18 thereby prevent lateral separation of each of mold parts from each other. Thus, in the casting condition all the mold parts 14, 15,16 and 17 are in face-to-face engagement with each other and the volume of mold cavities 19 and 20 is at a minimum.

Referring to Figures 1 and 3, Figure 3 shows that mold part 15 has a first rectangular shaped tongue 27 extending along an edge of mold part 15 and a second rectangular shaped tongue 27a extending along an opposite edge of mold part 15. Similarly, the mold part 14 has a first rectangular shaped tongue 37 extending along an edge of mold part 14 and a second rectangular shaped tongue 37a extending along an opposite edge of mold part 14. It is these tongues that cooperate with corresponding mating grooves in the end parts 16 and 17 that permit a controlled lateral separation of the mold parts 14 and 15 which produces an expansion of the mold cavity volume to prevent an interference fit occurring between the cast article and the sidewalls of the mold cavity.

A reference to Figure 4B shows an end view of the end mold part 17 revealing the first angled grove 17b along one edge of mold part 17 and the second angled grove 17c located along an opposite edge of mold part 17. The angled groove 17bslidingly engages tongue 37a of mold part 14 to permit longitudinal displacement relative thereto and the angled groove 17c sliding engages a corresponding tongue 27a of mold part 15 to permit longitudinal displacement relative thereto. The longitudinal displacement along the tongues produces a separating lateral displacement of mold part 14 and 15 from each other as the mold parts 14 and 15 are displaced upward. Similarly tongue 27 and tongue 37 engage angled grooves (not shown) in end mold part 16. As mold parts 16 and 17 are identical only end mold part 17 is described herein.

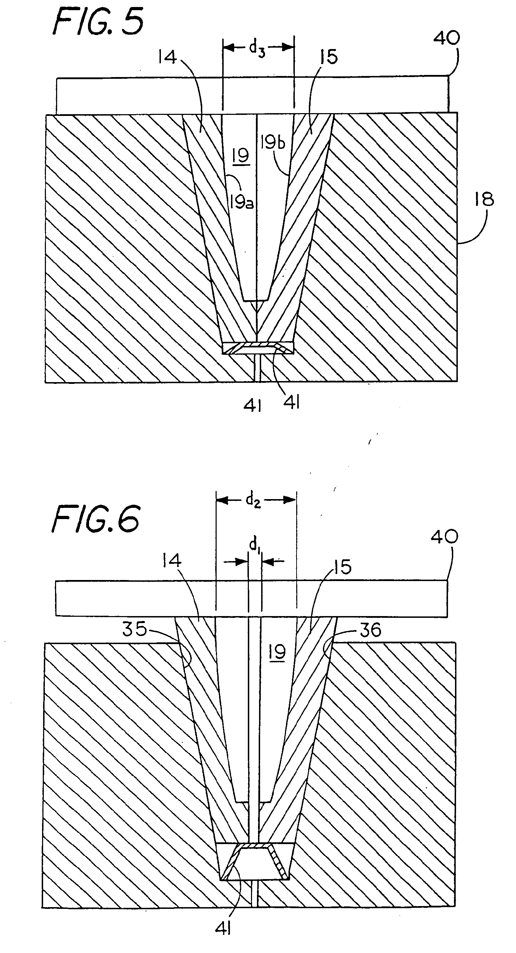

In order to appreciate the operation of the invention reference should be made to Figure 5 and Figure 6. Figure 5 shows a view taken along line 5-5 of Figure 2 with a holding member 40 located on top of mold block 18 to hold the mold parts 14 and 15 in casting position. Figure 5 shows mold parts 14 and 15 in a face-to-face condition with the volume of mold cavity 19 at a minimum for casting a molten metal that expands during the solidification phase. The cavity 19 is formed by an upwardly divergingside wall 19a in mold part 15 and an upwardly diverging side wall 19b in mold part 14. Located at the apex end and beneath mold part 14 and 15 is a resilient member 41 that comprises a disc spring or the like. While a disc spring is shown other types of resilient members orforce generating members could be used. In the embodiment shown in Figure 5 the plate 40 maintains the mold parts 15 and 16 in the downward casting condition with the resilient member 41 located in a cavity below mold part 15 and 16. Resilient member 41 provides an upward axial force to cause mold parts 14 and 15 to move upward in mold block 18 but mold parts 14 and 15 are prevented from doing so by plate 40.

Figure 6 illustrates the mold parts 15 and 16 in the laterally expanded condition due to lifting of plate 40. That is spring 41 forces mold parts 14 and 15 axially upward. The upward force on the apex end of mold parts 14 and 15 together with the tongues thereon which slidingly mate with grooves on end mold parts 16 and 17 causes the mold parts 14 and 15 to laterally separate from each other as the mold parts 14 and 15 move upward. Figure 5 shows the mold parts 14 and 15 in the face-to-face condition or casting condition while Figure 6 shows the mold parts 14 and 15 in the spaced apart condition with the separation distance being denoted by distance d_{1.} Note, the diameter of the cavity 19 in the casting condition as shown in Figure 5 is d₃ which is less than the diameter d₂ of the cavity 19 in the solidified condition which is illustrated in Figure 6. That is, as the mold parts 14 and 15 are driven axially upward they slide along the angled surface 35 and 36 of mold block 18 by the guidance of the tongues of mold parts 14 and 15 and the grooves on end parts 16 and 17. As a consequence the mold cavity 19 therein expands from a first casting volume to a larger solidification volume. By correlating the volume size in the casting condition as shown in Figure 5 to the after cast condition shown in Figure 6 one can eliminating the interference fit between the cast article and the sidewalls of mold parts 14 and 15. That is, because the mold parts 14 and 15 move laterally apart from each other it creates additional space to accommodate the metal in the expanded condition thereby allowing one to remove the cast article from the mold without injuring the mold parts or destroying the cast article. In addition, since the mold parts move laterally from each other the parts are pulled in a normal direction away from the cast parts, which minimizes damage to the article in the cast condition, because the surfaces of the cast article and the surfaces of the mold do not slide past one another.

Figures 7 -10 show an alternate embodiment of the expanding mold 52 wherein a one piece collet type mold is used to form a mold cavity. Expanding mold 52 comprises a set of radial segments 52a, 52b, 52c, 52d, 52e, 52f and 52g which cantilever outward from an apex base of 52h of expanding mold 52. Expanding mold 52 has a frusto-conical shape and is made from a resilient material so that each of the radial segments can be maintained or will return to the separated condition illustrated in Figure 7 and Figure 8. Located below the apex of expanding mold 52 is a resilient member such as a coil spring 61 that provides a normal upward force on expansion mold 52.

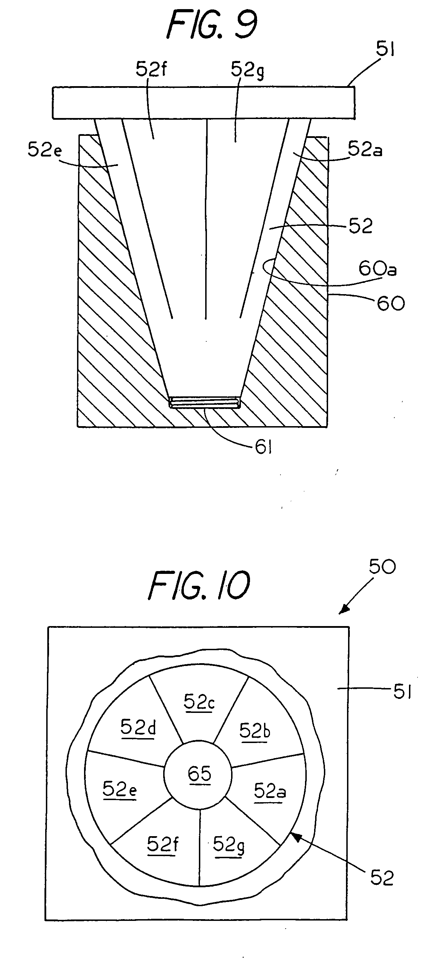

A reference to Figure 9 and Figure 10 shows the expanding mold 52 in a casting condition having a mold cavity of a minimum volume. Figure shows that the radial segments have been brought into lateral contact with each other by the downward displacement of plate 51 in mold block 60 which is resisted by a compression spring 61. That is, the mold block 60 has a converging sidewali 60a that allows the expanding mold 52 to slide therealong while at the same time forcing the radial segments into lateral contact with each other.

Figure 10 shows a top view, partially in section, revealing expanding mold 52 and the radial segments in a face-to-face condition to form a central, cylindrical-shaped mold cavity 65. In the embodiment shown the mold cavity is formed by the cooperation of multiple segments. When expanding mold 52 is in the condition shown in Figure 10 the molten metal can flow into the mold cavity 65. As the metal cools the plate 51 can be raised from mold block 60 allowing the spring force of spring 61 to force expanding mold 52 upward in block 60. As it does so the radial segments, which are cantilver type springs laterally separate as shown in Figure 7 thereby increasing the volume of the mold cavity 65 so that a cast article therein is not held in interference fit by the sidewalls of the radial segments.

Thus, in the embodiments shown in Figures 7-10 each of the segments expand radially outward thereby moving the sidewalls of the segments laterally away from a cast article to eliminate an interference fit between the cast article and the sidewalls of the mold.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A mold assembly for casting a fishing sinker that expands upon solidification comprising:
a mold block having a converging sidewall therein;
a first mold part, said first mold part having a first face having a portion of a mold cavity therein and a second face for engaging a portion of the converging sidewall of the mold block;
a second mold part, said second mold part having a first face having a further portion of a mold cavity therein and a second face for engaging an opposite portion of the converging sidewall of the mold block, said first mold part and said second mold part positionable in a condition to create a mold cavity of a first volume; and
a member, said member located in an axial condition with respect to said first mold part and said second mold part to thereby generate a force to direct said first mold part and said second mold part in a direction outwardly of said mold block thereby causing said first mold part and said second mold part to laterally separate to increase the volume of the mold cavity therein to prevent formation of an interference fit between a solidified cast article and the mold parts.

2. The mold assembly of claim 1 wherein the first mold part second face comprises an angled face for allowing lateral movement of said first mold part as said first mold part is axially displaced in said mold block.

3. The mold assembly of claim 2 wherein the second mold part second face comprises an angled face for allowing lateral movement of said second mold part as said first mold part is axially displaced in said mold block.

4. The mold assembly of claim 1 wherein the first mold part includes an angled tongue and a third mold part includes an angled groove with said angled tongue and said angled groove in sliding engagement so that an axial displacement of said first mold and said second mold part forces said first mold part away from said second mold part.

5. The mold assembly of claim 4 wherein the first mold part includes a second angled tongue and a fourth mold part includes an angled groove with said angled tongue on said fourth mold part in sliding engagement therewith.

6. The mold assembly of claim 1 wherein the member comprises a disc spring.

7. The mold assembly of claim 1 including a top plate for holding said first mold part and said second mold part in a condition where the volume of the mold cavity of the first volume is in a minimum volume condition.

8. The mold assembly of claim 1 wherein the outer surfaces of each of the mold parts diverge away from an apex end of the mold parts and a sidewall of the mold block converges toward a sidewall apex end of the mold block so that an axial displacement of said first mold part and said second mold part toward the sidewall apex end of the mold block to cause said first mold part and said second mold part to form the mold cavity of the first volume therein.

9. The mold assembly of claim 1 wherein a molten bismuth is located in the mold cavity of the first volume.

10. A method of casting a fishing sinker that expands during the solidification phase comprising:
placing an expandable mold in a mold block;
compressing the expandable mold to create a mold cavity having a mold casting volume by contracting the expandable mold with the mold block;
pouring a molten metal that normally expands during a solidification phase to form an interference fit in the expanding mold; and
enlarging the expandable mold to create a mold cavity solidification volume wherein a solidified metal forms a non-interference fit with the expandable mold to thereby permit release of the solidified metal from the mold.

11. The method of claim 10 wherein the pouring a molten metal comprises pouring a metal containing sufficient bismuth to cause expansion of the molten metal during a solidification phase.

12. The method of claim 10 including the step of forming a converging sidewall in a mold block and a converging sidewall on the expandable mold so that axial displacement of the expandable mold in a first direction reduces the volume of the mold cavity and axial displacement of the expandable mold in an opposite direction increases the volume of the mold cavity.

13. The method of claim 10 including the step of placing a spring in the mold block to provide a separation force for the expandable mold.

14. The method of claim 10 wherein the step of placing an expandable mold comprising placing at least a two part expandable mold in the mold block.

15. The method of claim 10 wherein the step of placing an expandable mold comprises placing a set of cantilevered members in the mold block.

16. The method of claim 10 wherein the step of placing an expandable mold comprises placing a collet mold in the mold block.

17. The method of claim 10 wherein the step of enlarging the mold is initiated during a solidification phase of the molten metal.

18. The method of claim 10 including the step of compressing the mold comprises the step of axially displacing the mold parts to produce contact of a lateral face of each of the mold parts.

19. A mold assembly for casting metal fishing sinkers that expand during a solidification phase comprising:
a mold block, said mold block having an opening with a sidewall therein;
an expandable mold having a further sidewall for engaging the sidewall of said mold block to hold the expandable mold in a casting condition and then allow lateral expansion of a mold cavity therein to thereby prevent a cast article that expands upon solidification from forming an interference fit in the expandable mold.

20. The mold assembly of claim 19 wherein the expandable mold has at least two parts that together form the mold cavity for casting a fishing sinker from bismuth.
